# EUROPEAN PATENT APPLICATION

(11) **EP 2 320 263 A1**
(43) Date of publication of application: **11.05.2011**
(21) Application number: 09468010.5
(22) Date of filing: 05.11.2009
(51) Int. Cl.: G02B 27/01, G02C 7/14, A42B 3/04, G02B 7/00

(54) **Head mounted multi view monitoring and alerting device**

(71) Applicant: POZOR 360 d.o.o., 4220 Skofja loka (SI)
(72) Inventor: Tomazic, Anton, 1230 Domzale (SI)

(57) **Abstract**

Head mounted display device like, for instance, glasses, comprised of a frame with a miniature camera for transmitting, in real time, a mirrored (left:right) video Image of the rear view (with respect to a user) to said display. The video signal is processed so that any moving object approaching from behind said user is recognized, marked (with flashing frame), and so that the user is alerted with flashing light on said display, and/or with alerting sound. The last few minutes of the video are being continuously recorded for the purpose of evidence material in case of an accident (like a "black box"). The clarity and the brightness of the images can be controlled with a special button. Within one side of the frame a replaceable battery is stored.

## Description

PROBLEM TO BE SOLVED: To improve the safety and the comfort in cycling and other similar activities.

SOLUTION: This device that can transmit the rear view without the need of the cyclist to look back by turning his head, and which can more readily alert him about the oncoming vehicles from behind.

The utility model discloses a framework (1) that is installed on the head in a similar way as glasses (or over normal glasses). On one side (depending on the rule of the road) extends an arm or handle (rotating shaft) (2), fitted with a miniature camera (3), which may be turned back or flexibly to another arbitrary direction.

The image is continuously processed by a digital signal processing chip and a video coder (5), and is then immediately transmitted to the (liquid crystal) display screen (4), which is installed on the front of the frame, but so as not to impede the normal view. The picture is being processed and mirrored left:right to get the same feeling as when watching the traditional rear mirror. The clarity and brightness of the images can be controlled with a special button that also serves as the On/Off Button (7). The image processing can also be adjusted according to weather conditions and luminance.

Both the miniature camera and the display are small, light weight and resist water, moisture and dust. Within one side of the frames is stored a replaceable battery (6).

When wearing the utility model on the head the cyclist can normally see both simultaneously - the front and the rear view - without turning around and risking the loss of balance or attention. This functionality is particularly useful for older people with less flexibility and/or impaired hearing.

To increase the safety of cyclists, a specific function is also included to signal (or alert) an oncoming vehicle or other large object (recognized and identified by specific software) via a special alarm light on the display. The video signal is processed in real time to recognize the objects that approach from behind, marking them in a flashing yellow frame and alerting the user by red light on the display (and/or the alerting sound). The last few minutes of the video are being continuously recorded for the purpose of any evidence that may be used as material in case of an accident ("black box").

The data recorded (video clip of the last few minutes) are saved on the memory chip for later use each time that the device is turned Off, or unexpectedly interrupted in its function.

This rear viewing device can later be adapted for other (than cycling) purposes of situation awareness, just by changing the software dedicated to recognize the movement in the video signal. For example it can be also useful for hunters as an aid in recognizing movement of objects of any shape and size. The adapted device can also be very useful for soldiers in close combat and law enforcement officers when chasing suspects in a dangerous area.

Since there are millions of cyclers riding in heavy traffic all around the world, and due to an elegant and modem design with high popularization value, this device has good market prospects.

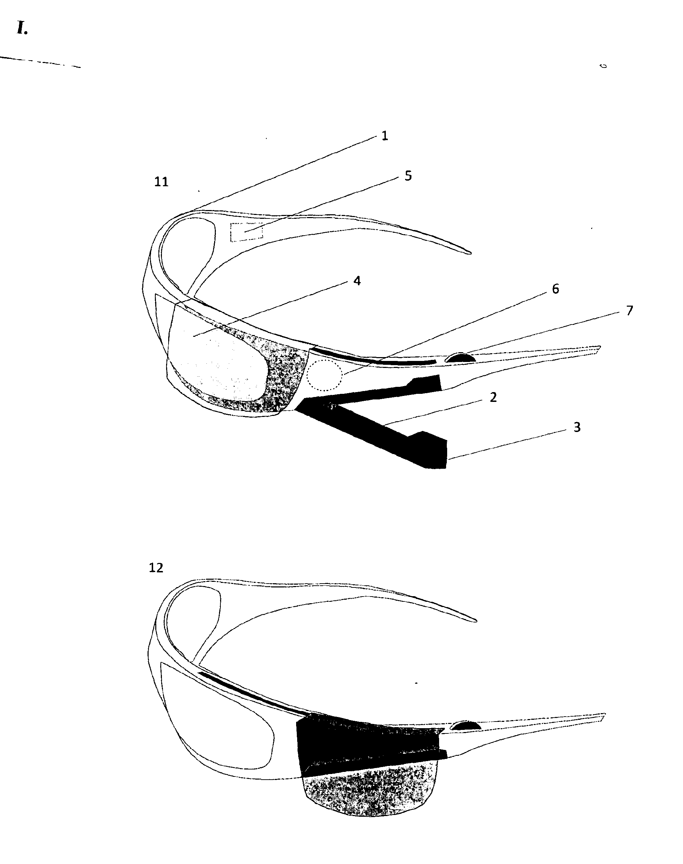

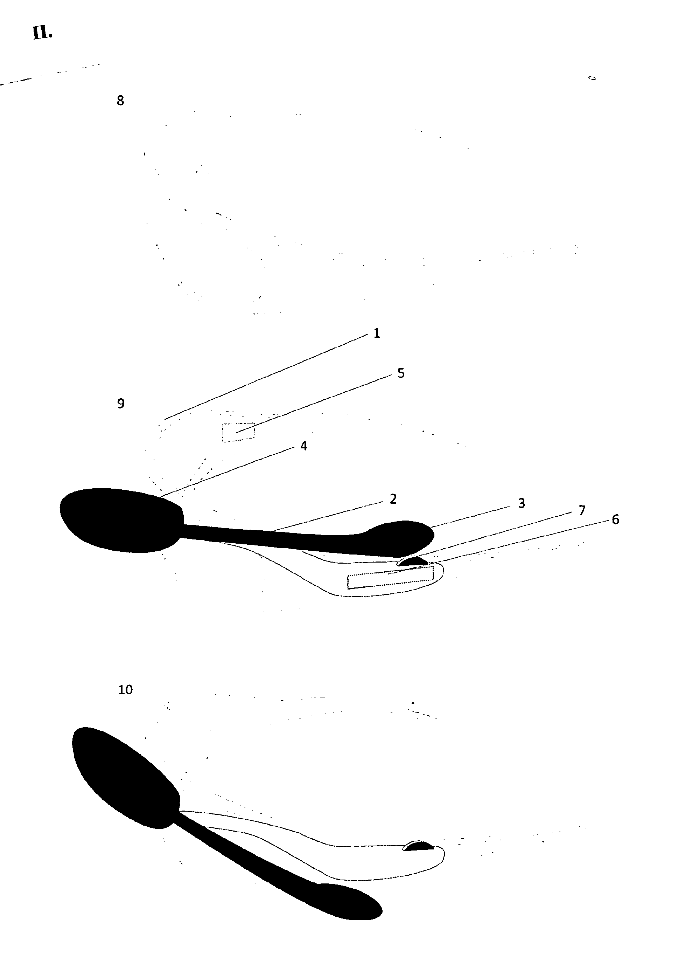

## Claims

1. A rear view device to be installed on the head, in a similar way as glasses, comprised of a miniature camera and display screen
wherein
the video signal of the rear view from the camera (3) is transmitted - mirrored (left:right) - in real time to the display (4) and designed to recognize any moving objects that approach from the back, marking them (with flashing frame) and alerting the user by flashing light on the display
